# EUROPEAN PATENT SPECIFICATION

(11) **EP 0 867 590 B1**
(45) Date of publication and mention of the grant of the patent: **27.10.2004**
(21) Application number: 98200976.3
(22) Date of filing: 27.03.1998
(51) Int. Cl.: E06B 1/60, E06B 1/20, B60J 1/00

(54) **Mobile accomodation with an openable or non-openable window**
Mobile Unterkunft mit einem eventuell öffnungsfähigem Fenster
Logement mobile avec fenêtre, ouvrante ou non

(30) Priority: 28.03.1997 NL 1005678
(43) Date of publication of application: 30.09.1998
(73) Proprietor: POLYPLASTIC B.V., 3044 CK Rotterdam (NL)
(72) Inventor: 't Hoen, Jan, 3123 CN Schiedam (NL)
(74) Representative: Van den Heuvel, Henricus Theodorus

(56) References cited:
- WO-A-84/02736
- WO-A-95/23271
- DE-A- 3 627 700
- DE-U- 7 512 252
- FR-A- 1 510 397
- FR-A- 2 227 418
- FR-A- 2 317 464
- GB-A- 1 167 607
- US-A- 2 840 202
- US-A- 3 981 067

## Description

The present invention relates to a mobile accommodation, such as for instance a caravan, boat or camper, comprising a wall with a wall opening in which is arranged an openable or non-openable panel such as for instance a window or door, wherein the panel is placed in the wall opening with interposing of a mounting frame, which mounting frame is provided with mounting means to effect a firm connection with an edge of the wall opening and comprises a flange part which lies against an outer side of the wall over at least a part of the periphery of the wall opening.

The invention herein relates more particularly to the mounting frame applied therein. As in a known mobile accommodation, the mounting frame serves on the one hand as edge finish of the opening arranged in the wall of the room area and on the other as basis for mounting the panel as well as the hinges, locks and sealing profiles associated therewith. The design of the mounting frame is specifically adapted hereto. Such a frame therefore significantly facilitates the placing of windows in openings provided for this purpose.

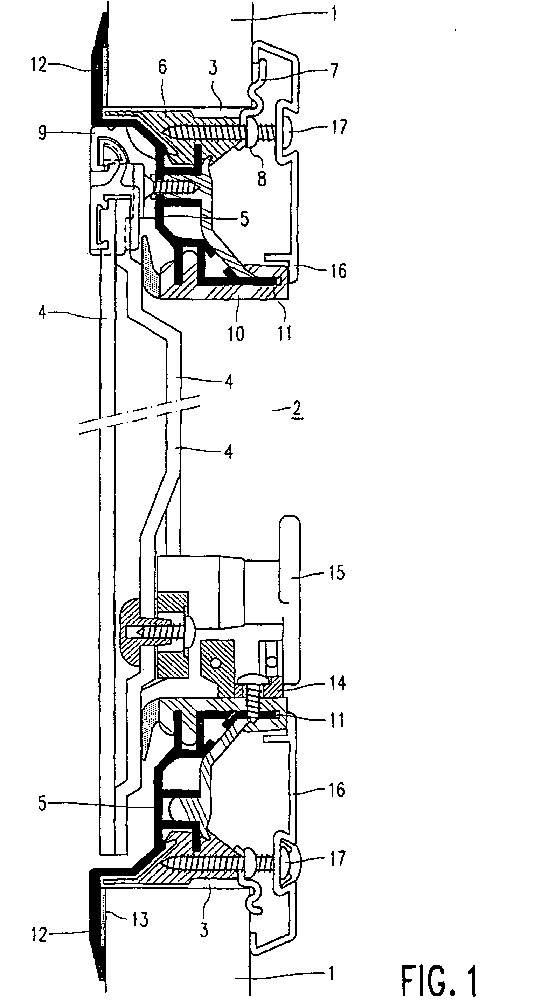

An example of an existing accommodation of the type stated in the preamble with an openable window is shown in figure 1. The figure shows a part of the wall 1 of the mobile accommodation with a wall opening 2 therein. Window 4 is here fixed in the wall opening with interposing of a mounting frame 5, wherein the mounting frame is in turn fixed to the edge 3 of wall opening 2 by means of a mounting profile 6, cleats, 7, screws 8 or other auxiliary means. Mounting frame 5 is provided in this case with a typical hinge profile 9 on which window 4 is mounted. Between window 4 and mounting frame 5 is situated a sealing rubber 10 which is clamped in and round an edge part 11 of mounting frame 5 and provides the desired seal. A flange part 12 of mounting frame 5 provides an attractive edge finish which not only affords an adequate seal against moisture and other weather effects from outside, whether or not with interposing of a suitable sealing paste or tape 13, but also improves the aesthetic appearance of the mobile accommodation, this being found to be an important sales factor. Mounting frame 5 moreover provides a basis for mounting the hinges and locks associated with the window, such as in this case the lock plate 14 of a lock 15. A cover 16 is screwed 17 against the mounting frame on an inner side to improve the appearance from this side.

Although such a mounting frame markedly simplifies the placing of windows and other movable or non-movable panels in a mobile accommodation, considerable working time is still involved in the placing of movable or non-movable panels, and this has a cost-increasing effect. The mounting frame in the above stated example must thus be fixed with screws at diverse positions after being arranged in the wall opening with the mounting profile, which is time-consuming. The covers must then also be screwed against the thus fixed mounting frame.

The object of the present invention is inter alia to provide a mobile accommodation and mounting frame of the type described in the preamble, wherein the placing of windows therein is significantly simplified and requires considerably less time.

In order to achieve the intended objective, a mobile accommodation of the type stated in the preamble has the feature according to the characterizing part of claim 1. A mounting frame can thus be fixed in the wall opening solely by said snap connection while it is being arranged therein. Fixing thereby requires no more time than arranging of one or several mounting elements on the edge of the wall opening, thus resulting in a significant time-saving.

The mounting means comprising a mumber of mounting elements allows for exceptionally simple arrangement and, in a preferred embodiment thereof wherein both legs are directed slightly toward each other and are resilient, does not even require the addition of supplementary fixation means. The mounting elements are simply pushed over the edge of the opening, for instance one on each side of the wall opening, whereafter the mounting frame is pushed into the opening. The mounting frame is then simultaneously fixed in the opening by the snap connections brought about with the mounting elements.

A further embodiment of the mobile accommodation has in this respect the feature that the first snap member comprises a resilient lip which extends from the strip-like part at an acute angle into the wall opening and is herein directed toward an inner side of the wall, and that the second snap member comprises a strip-like part of the mounting frame which engages behind said lip. During placing the mounting frame is pushed with the strip-like part over said lip so that the lip will be pressed in slightly. As soon as the mounting frame passes with the strip-like part beyond the lip of the mounting element the lip will spring back to fix the mounting frame at least practically rigidly now that the peripheral flange of the mounting profile lies against the outside of the wall.

In a further embodiment the mobile accommodation, wherein the mounting frame comprises a metal profile extending all around in the wall opening and wherein the metal profile comprises a flange part which is connected with interposing of a connecting part to a strip-like edge part extending substantially transversely of the flange part and intended for receiving a sealing rubber thereon, has the feature according to the invention that the connecting part comprises a rib on a side facing toward the accommodation which extends beyond the first snap member and that the rib comprises the second snap member on a side facing toward the first snap member. Such a metal profile can be formed comparatively simply, for instance by extrusion, and combines numerous functions within the scope of the invention. In a further embodiment the second snap member herein comprises a strip-like part of the profile which is placed on the rib in the direction toward the first snap member and the rib and the second snap member form an integral part of the metal profile.

Preferably used for the metal profile is aluminium or a comparable metal which allows of easy (de)forming and is corrosion-resistant. Parts from such a material do not however allow of easy mutual connection by means of welding. A further embodiment of the accommodation therefore has the feature according to the invention that the abutting ends of the metal profile are mutually connected by means of clamping pins and corresponding bores. It has been found in practice that by means of slightly conical pins, which are urged into the bores on the ends of the profile, a strong and durable attachment can be obtained between the ends which is not inferior to a considerably more expensive welded joint. A further reduction in cost can thus be realized.

A further embodiment of the mobile accommodation has the feature according to the invention that the mounting frame comprises at least one third snap member which is capable of co-acting with a fourth snap member of a cover which may or may not be hollow and which is arranged on an inner side of the wall in order to effect a snap connection therewith. Particularly in the case of caravans and campers the edge of the wall opening is also finished on the inside, this by placing there over the edge of the opening a cover usually manufactured from plastic. In existing cases the cover is herein screwed against the mounting frame. The time required herefor can be saved in the present embodiment according to the invention now that in this case the cover can be simply snapped onto the mounting frame without the necessity of additional operations or tools.

In a further embodiment hereof the mobile accommodation is characterized in that the cover comprises a hollow space for accommodating therein at least one roll of a roller blind unit. In this case practically all of the equipment of the window can be arranged manually in simple manner solely by means of a number of snap connections.

The invention will now be further elucidated with reference to an embodiment and a drawing. In the drawing:
- figure 1: shows a cross-section of a part of a wall of an existing mobile accommodation having a wall opening therein provided with an openable window as specified above; and
- figure 2: shows a cross-section of a wall with a wall opening of an embodiment of a mobile accommodation according to the invention.

The figures are otherwise drawn purely schematically and not to scale. some dimensions in particular are shown in greatly exaggerated manner for the sake of clarity.

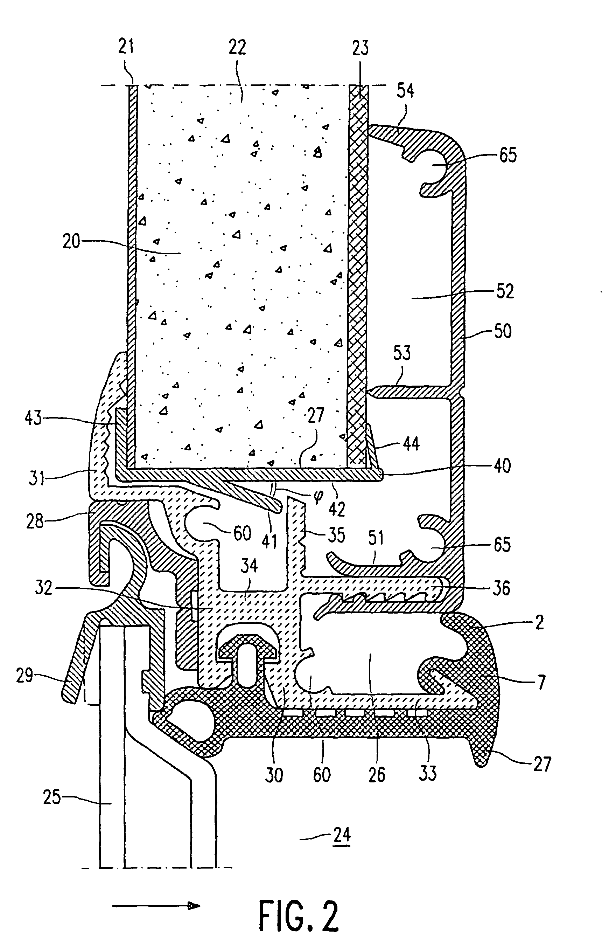

Figure 2 shows a part of a wall 20 of a mobile accommodation, in this case a caravan. The wall comprises an outer shell 21 of aluminium and an inner shell 23 of wood-like board between which is received a foam insulation layer 22 of polyurethane or other suitable insulation material. It will however be apparent that other materials can also be used for a wall of a mobile accommodation.

A wall opening 24 is provided in wall 20 either by already recessing it beforehand or by subsequently sawing it into the wall. The wall opening can be closed by means of a double-walled window 25 which is arranged hingedly in the wall opening.

Serving as mounting for window 25 is a mounting frame 26 which on one side is connected to edge 27 of wall opening 24 and on the other side provides a basis for mounting of the window and possible window furniture and other accessories. Mounting frame 26 comprises a metal profile 30 which follows the edge 27 of wall opening 24 all around with a flange part 31 which herein lies all around against an outer side of wall 21 and thus not only provides an attractive finish to the opening but moreover provides an adequate seal against moisture and other weather effects from outside. In addition, the metal profile comprises a strip-like edge part 33 which extends substantially transversely of the flange part and is intended for receiving thereon a sealing profile 27, as shown in the figure. Sealing profile 27, which may or may not be of natural rubber or another elastomer, and edge part 33 are herein closely adapted to each other in respect of profiling so that profile 27 can be easily fixed onto edge part 33 by hand but is then rigidly connected thereto.

Between both said parts 31,33 of profile 30 is situated a connecting part 32 on which a first part 28 of a window hinge profile is arranged. A second part 29 of the window hinge is fixed to window 25 and falls with a quarter-round part in the first part 28 in order to realize the intended hinge function. The second hinge profile 29 is herein riveted to the window as indicated by the dashed line, wherein a lateral groove in the window prevents the window later being released from the profile. In contrast to existing hinge profiles which are usually pushed onto the window, the groove is not required in this case to run over the full width of the window so that separate fixation pieces on the outer ends can be avoided. This not only saves labour time but also provides an aesthetically more attractive unit.

Metal profile 30 is in this case manufactured completely from aluminium and can be realized in standard lengths in relatively simple manner by extrusion. The profile is subsequently bent into the form of the wall opening, wherein bores are provided in the ends in order to mutually connect the ends by means of clamping pins arranged therein, these aspects being outside the plane of the drawing. A solid basis for the mounting frame can thus be obtained in relatively simple manner.

A number of mounting elements 40 which are placed at different positions on the edge of the opening and which each carry a first snap member 41 serve to fix the mounting frame in the wall opening. Mounting elements 40 comprise in this example a strip-like basic part 42 which engages with two resilient legs 43,44 round the edge 27 of wall opening 24. The inner one of the two legs 44 is herein directed toward the other, at least in the released situation, in order to exert sufficient grip on edge 27 when placed thereon. The first snap member 41 here comprises a resilient lip which extends from strip-like part 42 at an acute angle ϕ into wall opening 24. Mounting element 40 is manufactured entirely in a suitable plastic, in this case polyvinyl chloride, and can thereby also be realized by extrusion at relatively low cost. Herein a continuous extrusion profile is for instance formed with the shown cross-section, out of which the mounting elements are then sawn or cut to a length of for instance 10 centimetres in each case.

The first snap member 41 is adapted to a second snap member forming part of the mounting frame. The second snap member comprises in this example a strip-like part 35 of the metal profile which is placed in the direction toward the first snap member 41, transversely of a rib 34 of connecting part 32 of profile 30. Both rib 34 and strip part 35 are formed integrally with the rest of the extrusion profile from which the metal profile is formed.

When mounting frame 26 is placed in wall opening 24 from the outside as indicated by the arrow, the mounting frame will slide with strip-like part 35 over the lip 41 of mounting element 40 so that this latter will be pressed in. As soon as strip part 35 has passed over lip 41, the latter springs back and lip 41 snaps behind strip part 35. Flange part 31 of mounting frame 26 now lies against the outer wall 21 of the accommodation so that a practically clearance-free snap connection is effected, wherein wall 20 and flange part 31 fix the mounting frame 26 in forward direction and both snap members 41,35 provide a fixation in opposing direction. This requires no special tools or additional measures, whereby in exceptionally short time a window or any other openable or non-openable panel can thus be arranged in a mobile accommodation.

As on the outside the flange part 31 of the mounting frame provides an attractive edge finish, in similar manner a cover 50 is arranged on the inside over the edge 27 of the wall opening. In order to also simplify fixing hereof, the mounting frame comprises at least one third snap member in the form of a notched lip 36 for receiving thereover a fourth snap member in the form of a notched cavity 51 forming an integral part of the cover. Cover 50 can then be snapped in simple manner onto mounting frame 26, wherein owing to the notching in snap members 36,51 dimensional variations can be absorbed. An overhanging lip of the sealing rubber 27, which lies in biased manner against the outside of cover 50, ensures sufficient seal toward the relatively cold metal profile 30 of mounting frame 26.

The cover comprises a cavity 52 which can if desired provide space for one or more rolls of a roller blind unit and, with a view thereto, can take a more or less spacious form. Ribs 53,54 on either side of the cavity, and particularly intermediate rib 53, herein ensure a straight mounting of cover 50 substantially parallel to inner wall 23. A complete window finish can thus be realized by means of snap connections, which provides a considerable time-saving relative to more conventional systems wherein the various aspects were effected in each case by means of screw connections.

Although the invention has been further elucidated above with reference to just a single embodiment, it will be apparent that the invention is in no way limited to the given example. On the contrary, for a skilled person many more variations and embodiments are possible within the scope of the invention. The various snap members, whether or not in pairs, can thus be designed and embodied differently and nevertheless enable fast fitting of the mounting frame according to the invention. The materials used are also given by way of example and many alternatives are possible instead of these. The invention can also be applied for other types of panel than an openable window, such as for instance an entrance door, luggage hatch, sky light or any other pivotable component in the wall of a mobile accommodation, and the invention can also be applied advantageously for non-pivoting panels.

## Claims

1. Mobile accommodation, such as for instance a caravan, boat or camper, comprising a wall with a wall opening in which is arranged an openable or non-openable panel such as for instance a window or door, wherein the panel is placed in the wall opening with interposing of a mounting frame, which mounting frame is provided with mounting means to effect a firm connection with an edge of the wall opening and comprises a flange part which lies against an outer side of the wall over at least a part of the periphery of the wall opening, **characterized in that** the mounting means comprise a number of mounting elements (40) which are placed at different positions on the edge of the wall opening and which each carry a first snap member (41), **in that** the mounting elements each comprise a strip-like part which engages with two legs (43, 44) around the edge of the wall opening, and **in that** the mounting frame (26) comprises a second snap member (35) which is capable of effecting a snap connection with a first snap member of a mounting element when the mounting frame is placed in the wall opening from the outside and therein passes over the mounting elements.

2. Mobile accommodation as claimed in claim 1, **characterized in that** at least one of both said legs is directed slightly toward the other and is resilient.

3. Mobile accommodation as claimed in one or more of the preceding claims, **characterized in that** the first snap member comprises a resilient lip which extends from the strip-like part at an acute angle into the wall opening and is herein directed toward an inner side of the wall, and that the second snap member comprises a strip-like part of the mounting frame which engages behind said lip.

4. Mobile accommodation as claimed in one or more of the preceding claims, **characterized in that** the mounting element is manufactured entirely in a suitable plastic, in particular polyvinyl chloride.

5. Mobile accommodation as claimed in one or more of the preceding claims, wherein the mounting frame comprises a metal profile (30) extending all around in the wall opening and wherein the metal profile comprises a flange part which is connected with interposing of a connecting part to a strip-like edge part extending substantially transversely of the flange part and intended for receiving a sealing rubber thereon, **characterized in that** the connecting part comprises a rib on a side facing toward the accommodation which extends beyond the first snap member and that the rib comprises the second snap member on a side facing toward the first snap member.

6. Mobile accommodation as claimed in claim 5, **characterized in that** the second snap member comprises a strip-like part of the profile which is placed on the rib in the direction toward the first snap member.

7. Mobile accommodation as claimed in one or more of the claims 5 and 6, **characterized in that** the rib and the second snap member form an integral part of the metal profile.

8. Mobile accommodation as claimed in one or more of the claims 4, 5, 6 and 7, **characterized in that** the abutting ends of the metal profile are mutually connected by means of clamping pins and corresponding bores.

9. Mobile accommodation as claimed in one or more of the foregoing claims, **characterized in that** the mounting frame comprises at least one third snap member (36) which is capable of co-acting with a fourth snap member (51) of a cover (50) which may or may not be hollow and which is arranged on an inner side of the wall in order to effect a snap connection therewith.

10. Mobile accommodation as claimed in claim 9, **characterized in that** the cover (50) comprises a hollow space for accommodating therein at least one roll of a roller blind unit.

11. Mobile accommodation as claimed in claim 10, **characterized in that** the cover supports on the inside of the wall with two ribs adjacent to the space.

## Patentansprüche

1. Mobile Unterkunft, wie z.B. ein Wohnwagen, Boot oder Wohnmobil, mit einer Wand mit einer Wandöffnung, in der eine zu öffnende oder nicht zu öffnende Platte angeordnet ist, wie z.B. ein Fenster oder eine Tür, wobei die Platte in der Wandöffnung durch Zwischenschalten eines Halterahmens angeordnet ist, wobei der Halterahmen mit Haltemitteln versehen ist, um eine feste Verbindung mit einer Kante der Wandöffnung zu bewirken, und einen Flanschbereich aufweist, der über zumindest einen Teil des Umfangs der Wandöffnung an einer Außenseite der Wand anliegt, **dadurch gekennzeichnet, dass** die Haltemittel eine Anzahl von Halteelementen (40) beinhalten, die an der Kante der Wandöffnung an unterschiedlichen Positionen angeordnet sind und die jeweils ein erstes Schnappglied (41) tragen, dass die Halteelemente jeweils einen streifenartigen Teil aufweisen, der mit zwei Schenkeln (43, 44) um die Kante der Wandöffnung greift, und dass der Halterahmen (26) ein zweites Schnappglied (35) aufweist, das in der Lage ist, eine Schnappverbindung mit einem ersten Schnappglied eines Halteelements zu bewirken, wenn der Halterahmen von Außen in die Wandöffnung eingesetzt wird und dort drin die Halteelemente passiert.

2. Mobile Unterkunft nach Anspruch 1, **dadurch gekennzeichnet, dass** zumindest einer der beiden Schenkel etwas zu dem anderen gerichtet ist und elastisch ist.

3. Mobile Unterkunft nach einem oder mehreren der vorhergehenden Ansprüche, **dadurch gekennzeichnet, dass** das erste Schnappglied eine elastische Lippe aufweist, die sich von dem streifenartigen Teil unter einem scharfen Winkel in die Wandöffnung erstreckt und darin auf eine Innenseite der Wand gerichtet ist, und dass das zweite Schnappglied einen streifenartigen Teil des Halterahmens aufweist, der hinter dieser Lippe eingreift.

4. Mobile Unterkunft nach einem oder mehreren der vorhergehenden Ansprüche, **dadurch gekennzeichnet, dass** das Halteelement vollständig aus einem geeigneten Kunststoff hergestellt ist, insbesondere Polyvinylchlorid.

5. Mobile Unterkunft nach einem oder mehreren der vorhergehenden Ansprüche, wobei der Halterahmen ein Metallprofil (30) aufweist, dass in der Wandöffnung vollständig umläuft, und wobei das Metallprofil einen Flanschabschnitt aufweist, der unter Zwischenschaltung eines Verbindungsteils mit einem streifenartigen Kantenabschnitt verbunden ist, der sich im Wesentlichen quer zu dem Flanschabschnitt erstreckt und zur Aufnahme eines Dichtungsgummis vorgesehen ist, **dadurch gekennzeichnet, dass** das Verbindungsteil auf einer Seite, die zu der Unterkunft zeigt, eine Rippe aufweist, die sich über das erste Schnappglied erstreckt und das die Rippe das zweite Schnappglied auf einer Seite, die zu dem ersten Schnappglied zeigt, aufweist.

6. Mobile Unterkunft, nach Anspruch 5, **dadurch gekennzeichnet, dass** das zweite Schnappglied einen streifenartigen Teil des Profils aufweist, das auf der Rippe in der Richtung zu dem ersten Schnappglied angeordnet ist.

7. Mobile Unterkunft nach einem oder mehreren der Ansprüche 5 oder 6, **dadurch gekennzeichnet, dass** die Rippe und das zweite Schnappglied einen integralen Bestandteil des Metallprofils ausbilden.

8. Mobile Unterkunft nach einem oder mehreren der Ansprüche 4, 5, 6 und 7, **dadurch gekennzeichnet, dass** die aneinander anliegenden Enden des Metallprofils mit Hilfe von Klemmstiften und entsprechenden Bohrungen aneinander befestigt sind.

9. Mobile Unterkunft nach einem oder mehreren der vorhergehenden Ansprüche, **dadurch gekennzeichnet, dass** der Halterahmen zumindest ein drittes Schnappglied (36) aufweist, das in der Lage ist, mit einem vierten Schnappglied (51) einer Abdeckung (50) zusammenzuwirken, die hohl sein kann oder nicht und die an einer Innenseite der Wand angeordnet ist, um eine Schnappverbindung damit zu bewirken.

10. Mobile Unterkunft nach Anspruch 9, **dadurch gekennzeichnet, dass** die Abdeckung (50) einen Hohlraum aufweist, um darin zumindest eine Rolle einer Rollenjalousieeinheit aufzunehmen.

11. Mobile Unterkunft nach Anspruch 10, **dadurch gekennzeichnet, dass** sich die Abdeckung an der Innenseite der Wand mit zwei Rippen abstützt, die neben dem Hohlraum liegen.

## Revendications

1. Logement mobile, comme par exemple une caravane, un bateau ou un camping-car, comprenant une paroi munie d'une ouverture de paroi dans laquelle est placé un panneau ouvrant ou non, comme par exemple une fenêtre ou une porte, le panneau étant placé dans l'ouverture de paroi en intercalant un cadre de montage, lequel cadre de montage est muni d'un moyen de montage pour effectuer une connexion solide avec un bord de l'ouverture de paroi et comprend une partie bride qui se met en appui contre un côté extérieur de la paroi, sur au moins une partie de la périphérie de l'ouverture de paroi, **caractérisé en ce que** le moyen de montage comprend un certain nombre d'éléments de montage (40) qui sont placés en différentes positions sur le bord de l'ouverture de paroi et qui portent chacun un premier élément d'accrochage (41), **en ce que** les éléments de montage comprennent chacun une partie en forme de bande qui se met en prise avec deux pattes (43, 44) autour du bord de l'ouverture de paroi, et **en ce que** le cadre de montage (26) comprend un deuxième élément d'accrochage (35) qui est capable d'effectuer une connexion rapide avec un premier élément d'accrochage d'un élément de montage lorsque le cadre de montage est placé dans l'ouverture de paroi depuis l'extérieur et passe sur les éléments de montage.

2. Logement mobile selon la revendication 1, **caractérisé en ce qu'**au moins l'une desdites pattes est dirigée légèrement vers l'autre et est élastique.

3. Logement mobile selon l'une ou plusieurs des revendications précédentes, **caractérisé en ce que** le premier élément d'accrochage comprend une lèvre élastique qui s'étend depuis la partie en forme de bande en formant un angle aigu dans l'ouverture de paroi et est dirigée vers un côté intérieur de la paroi, et **en ce que** le deuxième élément d'accrochage comprend une partie en forme de bande du cadre de montage qui s'engage derrière ladite lèvre.

4. Logement mobile selon l'une ou plusieurs des revendications précédentes, **caractérisé en ce que** l'élément de montage est fabriqué entièrement en une matière plastique appropriée, en particulier le polychlorure de vinyle.

5. Logement mobile selon l'une ou plusieurs des revendications précédentes, dans lequel le cadre de montage comprend un profil en métal (30) qui s'étend tout autour de l'ouverture de paroi et dans lequel le profil en métal comprend une partie bride qui est connectée, avec une partie de connexion intercalée, à une partie de bord en forme de bande s'étendant sensiblement en travers de la partie bride et destinée à recevoir un joint en caoutchouc, **caractérisé en ce que** la partie de connexion comprend une nervure sur un côté tourné vers le logement qui s'étend au-delà du premier élément d'accrochage et **en ce que** la nervure comprend le deuxième élément d'accrochage sur un côté tourné vers le premier élément d'accrochage.

6. Logement mobile selon la revendication 5, **caractérisé en ce que** le deuxième élément d'accrochage comprend une partie en forme de bande du profil qui est placée sur la nervure dans la direction orientée vers le premier élément d'accrochage.

7. Logement mobile selon l'une ou plusieurs des revendications 5 et 6, **caractérisé en ce que** la nervure et le deuxième élément d'accrochage forment une partie intégrée au profil en métal.

8. Logement mobile selon l'une ou plusieurs des revendications 4, 5, 6 et 7, **caractérisé en ce que** les extrémités mises bout à bout du profil en métal sont mutuellement connectées au moyen d'axes de blocage et de trous correspondants.

9. Logement mobile selon l'une ou plusieurs des revendications précédentes, **caractérisé en ce que** le cadre de montage comprend au moins un troisième élément d'accrochage (36) qui est capable de coopérer avec un quatrième élément d'accrochage (51) d'un couvercle (50) qui peut être creux ou non et qui est placé sur un côté intérieur de la paroi afin de réaliser une connexion rapide avec celui-ci.

10. Logement mobile selon la revendication 9, **caractérisé en ce que** le couvercle (50) comprend un espace creux permettant de loger au moins un rouleau d'un store.

11. Logement mobile selon la revendication 10, **caractérisé en ce que** le couvercle est supporté à l'intérieur de la paroi par deux nervures voisines de l'espace.
